# EUROPEAN PATENT APPLICATION

(11) **EP 4 035 521 A2**
(43) Date of publication of application: **03.08.2022**
(21) Application number: 22154036.2
(22) Date of filing: 28.01.2022
(51) Int. Cl.: A01D 41/04, A01D 41/127, A01D 75/18

(54) **COMPACT AND MOVEABLE HARVESTING SYSTEM FOR HARVESTING AROUND OBSTACLES IN A FIELD**

(30) Priority: 28.01.2021 US 202117160914
(71) Applicant: CNH Industrial Belgium NV, 8210 Zedelgem (BE)
(72) Inventor: RICKETTS, Jonathan, Davenport, 52806 (US); OHMS, Travis, Blue Grass, 52726 (US)
(74) Representative: CNH Industrial IP Department

(57) **Abstract**

An automated system for moving a crop harvester relative to an obstacle in a crop field. The system includes a sensor that is configured to sense a presence of the obstacle in the crop field, and transmit a signal corresponding to the presence of the obstacle. A motor is configured to move the crop harvester relative to the agricultural vehicle. A controller is configured to activate the motor based upon the signal received from the sensor and thereby move the crop harvester relative to the agricultural vehicle to prevent physical contact between crop harvester and the obstacle.

## Description

### FIELD OF THE INVENTION

The present invention relates to a compact and moveable harvester for use in agriculture, and, in particular, for use in harvesting in the areas around and between obstacles located in a field.

### BACKGROUND OF THE INVENTION

Obstacles, such as solar panels, windmills, signs and electrical poles, for example, are commonly located in crop fields. Large machines, such as combine harvesters having elongated headers, are not well suited for reaching the crops in the areas between and around those obstacles. There exists a need to harvest in those areas in an effort to maximize harvest yield.

### SUMMARY OF THE INVENTION

According to one aspect of the invention, an automated system for moving a crop harvester relative to an obstacle in a crop field is provided. The crop harvester is configured to be movably mounted to an agricultural vehicle. The system includes a sensor that is configured to sense a presence of the obstacle in the crop field, and transmit a signal corresponding to the presence of the obstacle. A motor is configured to move the crop harvester relative to the agricultural vehicle. A controller is configured to activate the motor based upon the signal received from the sensor and thereby move the crop harvester relative to the agricultural vehicle to prevent physical contact between crop harvester and the obstacle.

The sensor may be configured to determine a distance between itself and the obstacle.

The sensor may be configured to determine a size of the obstacle.

Once the sensor no longer senses the obstacle, the controller may be configured to activate the motor based upon signals received from the sensor to return the crop harvester to its original position.

The system may further comprise a transversely extending arm connecting the crop harvester to the agricultural vehicle.

The transversely extending arm may be a telescoping member for moving the crop harvester in a transverse direction.

The system may further comprise the crop harvester. The crop harvester may be removably mounted to the agricultural vehicle.

The crop harvester may comprise a rotor, a foraminous concave positioned beneath the rotor through which threshed grain can pass, and a receptacle positioned beneath the concave for collecting the threshed grain.

The crop harvester may comprise one or more fans and a housing for the one or more fans that are together configured to direct air rearwardly of the crop harvester, and, thereby direct material other than grain out of the crop harvester.

The crop harvester may comprise a comb head positioned forward of the rotor for directing the crop towards the rotor.

The crop harvester may comprise a grain elevator that is configured to transport the collected grain from the receptacle to a separate grain tank of the crop harvester.

There is also disclosed an agricultural vehicle comprising any system disclosed herein.

The agricultural vehicle may be a grain cart tractor.

The agricultural vehicle may be configured to move along a path guided by a global positioning system (GPS),. The system may be configured to move the crop harvester transversely with respect to said path as the agricultural vehicle moves along said path.

According to another aspect of the invention, a method of moving a crop harvester, which is configured to be movably mounted to an agricultural vehicle, relative to an obstacle in a crop field, said method comprising:
sensing a presence of the obstacle in the crop field, using a sensor, and transmitting a signal corresponding to the presence of the obstacle to a controller; and
activating a motor based upon the signal received by the controller to move the crop harvester relative to the agricultural vehicle in order to prevent physical contact between crop harvester and the obstacle.

The method may further comprise the step of calculating a distance separating the obstacle from the crop harvester.

The method may further comprise the step of either identifying or calculating a ground speed of the crop harvester.

The method may further comprise the step of calculating a time to reach the obstacle based upon the ground speed and the calculated distance.

The method may further comprise the step of comparing the calculated time with a pre-determined time, and, performing the activating step once the calculated time either equals the pre-determined time or is within a pre-determined threshold of the predetermined time.

The method may further comprise the step of returning the crop harvester to its original position once the sensor ceases to sense the presence of the obstacle.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
FIG. 1 is a schematic elevation view of an agricultural vehicle having a crop harvester that is moveably mounted thereto, wherein the field is shown having multiple obstacles.
FIG. 2 is a schematic block diagram of a system for controlling the position of the crop harvester relative to the vehicle and the obstacle in the field.
FIG. 3 depicts a method for controlling the position of the crop harvester relative to the vehicle and the obstacle in the field.
FIG. 4 is a front elevation view of the crop harvester, which is shown schematically, and wherein numerous components are shown cut-away to reveal internal details of the crop harvester.
FIG. 5 is a side elevation view of the crop harvester, which is shown schematically, and wherein numerous components are shown cut-away to reveal internal details of the crop harvester.

### DETAILED DESCRIPTION OF THE INVENTION

Corresponding reference characters indicate corresponding parts throughout the several views. The exemplification set out herein illustrates an embodiment of the invention, in one form, and such exemplification is not to be construed as limiting the scope of the invention in any manner.

For convenience of reference and understanding in the following discussions, and with respect to the various drawings and their descriptions, the point of reference for the use of various terms that are hereafter employed, including "left", "right", "forward", "rearward", "front", "back", "top", and "bottom", should generally be considered to be taken from a point at the rear of the agricultural vehicle facing in its normal direction of travel, unless it is clear from the discussion and context that a different point of reference is appropriate. Any use of such terms should therefore be considered exemplary and should not be construed as limiting or introducing limitations.

Moreover, inasmuch as various components and features of crop harvesters are of well-known design, construction, and operation to those skilled in the art, the details of such components and their operations will not generally be discussed in significant detail unless considered of pertinence to the present invention or desirable for purposes of better understanding.

In the drawings, like numerals refer to like items, certain elements and features may be labeled or marked on a representative basis without each like element or feature necessarily being individually shown, labeled, or marked, and certain elements are labeled and marked in only some, but not all, of the drawing figures.

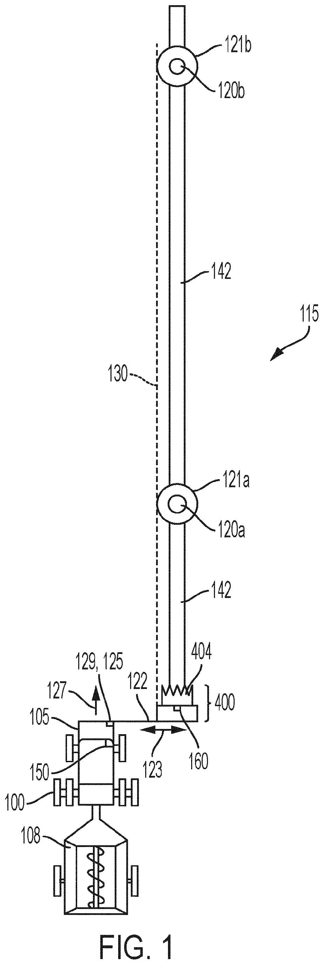

Turning now to the drawings wherein a preferred embodiment of the invention is shown, FIG. 1 is a schematic elevation view of an agricultural vehicle 100 having a crop harvester 400 that is moveably mounted thereto. Crop harvester 400 is configured to harvest crop in the field 115. The field 115 is shown having multiple obstacles 120a and 120b (referred to collectively as obstacles 120). In FIG. 1, obstacles 120 are depicted as poles located in the field 115, however, the obstacles 120 could represent other items, as noted above.

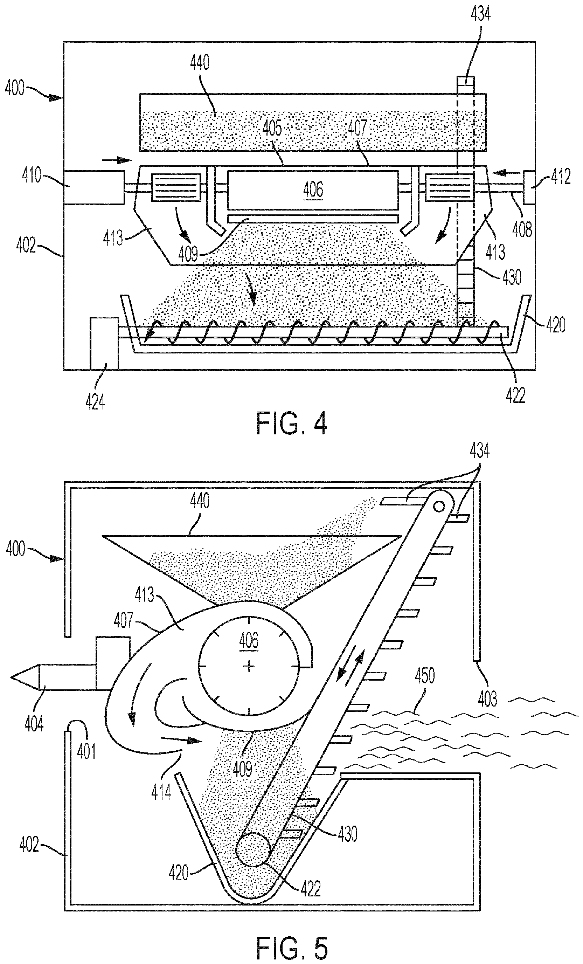

Large agricultural equipment, such as a combine harvester, may be used to harvest most of the field. However, as described above, large agricultural equipment is not generally useful for harvesting crop that is located either around or between obstacles 120 in the field 115. As can be seen, a strip of unharvested crop 142 remains between obstacles 120 after the field 115 has been harvested by large agricultural equipment. Vehicle 100 along with crop harvester 400 are uniquely configured to harvest the unharvested crop area 142 (or path 142) that cannot be easily reached by the large agricultural equipment. Further details in connection with harvester 400 are described with reference to FIGS. 4 and 5.

The vehicle 100 is an agricultural vehicle, such as a tractor. The tractor may be a grain cart tractor that is typically used in tandem with a combine harvester. It should be understood that mounting the crop harvester 400 to a grain cart tractor would be especially convenient because the grain cart tractor has other uses in the field 115, namely, use alongside a combine harvester.

Vehicle 100 includes a mount or hitch 105 that is disposed on a front end thereof. Hitch 105 may be a three-point hitch that is commonly found on tractors. An example of a three-point hitch is described in U.S. Patent No. 7108475, which is incorporated by reference herein in its entirety. A grain cart 108 is (optionally) mounted to another hitch provided on a rear side of vehicle 100.

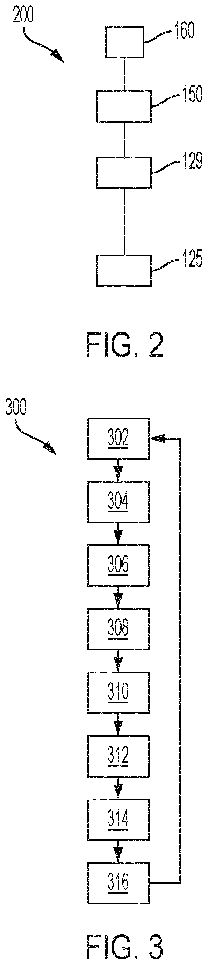

One end of a telescoping arm 122 is mounted to hitch 105. Crop harvester 400 is mounted to the opposing, free end of telescoping arm 122. Telescoping arm 122 is configured to extend and retract relative to vehicle 100 in the directions represented by arrows 123. Telescoping arm 122 is controlled by a hydraulic, pneumatic, mechanical, electrical or electro-mechanical motor 125. Arm 122 along with motor 125 may be referred to as either means for moving or telescoping the crop harvester 400. Operation of motor 125 is controlled by a controller 150, the features of which will be described with reference to FIG. 2.

In operation, vehicle 100 moves in the forward direction (as depicted by arrow 127) and generally adjacent and parallel to the unharvested crop area 142. Vehicle 100 may move either manually or automatically along a GPS line 130. An auto guidance feature can keep the vehicle 100 on a set course along GPS line 130, as is known in the art.

A proximity sensor 160 is mounted to a forward facing side of crop harvester 400. Alternatively, sensor 160 may be mounted to vehicle 100. Sensor 160 detects the presence of obstacles 120. According to one aspect, sensor 160 can detect the distance between itself and an obstacle 120. Sensor 160 may use RADAR, LiDAR, laser, Sonar, or other means for sensing. Sensor 160 may also be a camera. According to one aspect, sensor 160 can emit an electromagnetic field or a beam of electromagnetic radiation (infrared, for instance), and look for changes in the field or return signal. Sensor 160 could be an optical sensor, a Hall-Effect sensor, an ultrasonic sensor, a capacitive proximity sensor, a photoelectric sensor, an inductive proximity sensor, or a magnetic sensor, for example. Sensor 160 may be generally referred to as a means for sensing.

Sensor 160 is configured to communicate the sensed distance between itself and an obstacle 120 back to a computer controller 150. Controller 150 may form part of a control unit that is mounted to either vehicle 100 or crop harvester 400. Motor 125 has a controller 129 that is configured to control operation of motor 125 based upon signals from controller 150. Based upon the signal communicated by sensor 160 and in response to computations by a computer algorithm, controller 150 is configured to activate motor 125 in order to move crop harvester 400 outside of the path 142 of obstacle 120 as well as return crop harvester 400 back to path 142 as soon as the crop harvester 400 clears the obstacle 120. It should be understood that any contact between crop harvester 400 and obstacle 120 could result in damage to the crop harvester 400, the vehicle 100 and/or obstacle 120.

FIG. 2 is a schematic block diagram of a system 200 for controlling the position of the crop harvester 400 relative to the vehicle 100 and obstacle 120. System 200 includes sensor 160, controller 150, motor controller 129, and motor 125. The components of system 200 may be connected via either a wireless or wired connections.

FIG. 3 depicts a method 300 for controlling the position of the crop harvester 400 relative to the vehicle 100 and obstacle 120. At the outset, the vehicle 100 moves either manually or automatically along a guided path 130, which may be set by GPS. Crop harvester 400 moves along path 142 harvesting the crops there along. At step 302, sensor 160 senses the existence of obstacle 120a. Specifically, sensor 160 detects the distance between itself and obstacle 120a. Sensor 160 then transmits a signal, which is representative of the sensed distance, to controller 150. At step 304, controller 150 calculates the distance D1 to obstacle 120 based upon the transmitted signal.

At step 306, controller 150 calculates the distance D2 between the harvester 400 and an imaginary boundary zone 121a, which is a circular zone superimposed about the obstacle 120a. The boundary zone 121a represents the zone in which the harvester 400 may not enter as harvester 400 passes by obstacle 120a so as to prevent contact between obstacle 120a and harvester 400. The distance between the boundary zone 121a and obstacle 120 is a known quantity that is either factory set or set by the user. Also, the radius or width of obstacle 120 may be a quantity that is detected by sensor 160 (preferable) or a quantity that is input by an operator of vehicle 100.

At step 308, controller 150 identifies the ground speed of harvester 400. The ground speed of harvester 400 may simply be the ground speed of vehicle 100, which is communicated to controller 150 by a ground speed sensor (or other sensor) on vehicle 100. Alternatively, the ground speed of harvester 400 may be calculated based upon the derivative of the signals transmitted by sensor 160 at step 302. In other words, the ground speed of harvester 400 may be the rate that sensor 160 approaches the obstacle 120a (i.e., the rate of approach). Other means for identifying the ground speed of the harvester 400 should be well understood by those skilled in the art.

At step 310, controller 150 calculates the approximate time T1 until the harvester 400 would intersect zone 121a (i.e., if harvester 400 were not moved out of path 142). According to one exemplary equation, T1 = D2 / (Ground Speed). The time T2 required for harvester 400 to move from the extended position to the retracted position is a known and factory-set quantity.

At step 312, controller 150 compares time T1 with time T2. Once time T2 either equals or approaches time T1 within a predetermined time threshold (i.e., by a safety factor), the method 300 proceeds to step 314. At step 314, controller 150 transmits a signal to motor controller 129. Upon receiving that signal, motor controller 129 activates motor 125 to move arm 122 and harvester 400 transversely (in the direction of arrows 123) from the extended position to the retracted position. In the retracted position, harvester 400 is positioned outside of path 142 and out of the way of obstacle 120a. As harvester 400 passes by obstacle 120a, sensor 160 continues to sense obstacle 120a. As vehicle continues to move in the forward direction, sensor 160 will eventually not sense the obstacle 120a. Once this occurs, the method 300 moves to step 316.

At step 316, controller 150 transmits a signal to motor controller 129. Upon receiving that signal, motor controller 129 activates motor 125 to move arm 122 and harvester 400 from the retracted position and to the extended position. Harvester 400 is then returned to path 142 in which harvester 400 harvests the crop within path 142.

This method 300 is repeated once harvester 400 approaches obstacle 120b.

Harvester 400 may move between two different transverse positions, i.e., an extended position (shown) in which the harvester 400 is positioned a distance away from vehicle 100 and in path 142, and a retracted position (not shown) in which the harvester 400 is positioned closer to vehicle 100 and outside of path 142. According to one aspect, harvester 400 may only be maintained in one of those two positions, and no position therebetween. Alternatively, harvester 400 may be maintained in any transverse position between the extended and retracted positions.

It should be understood that various methods exist for timing the movement of harvester 400 relative to the approach of obstacle 120, and this invention is not necessarily limited to any one particular method. It should also be understood that the steps of the method 300 are not limited to any particular step of sequence of steps.

It is to be understood that the above-described operating steps are performed by the controllers 150/129 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controllers 150/129 described herein, such as the aforementioned method of operation, is implemented in software code or instructions which are tangibly stored on the tangible computer readable medium. Upon loading and executing such software code or instructions by the controller, the controller may perform any of the functionality of the controller described herein, including any steps of the aforementioned method described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

Turning now to the features of the crop harvester, it should be understood that the crop harvester is configured to be mounted to vehicle 100. A suitable crop harvester for use with vehicle 100 is disclosed in U.S. Patent Nos. 5419107, 5285622 and 6315659, each of which is incorporated by reference herein in its entirety and for all purposes. Another suitable crop harvester 400 for use with vehicle 100 is described hereinafter with reference to FIGs. 4 and 5.

FIGs. 4 and 5 depict crop harvester 400 in a schematic form. Crop harvester 400 includes a hollow housing 402 surrounding a plurality of interior components. Housing 402 includes an inlet 401, through which crop is delivered into housing 402, and an outlet 403, through which material other than grain (MOG) is exhausted from housing 402.

A comb 404 is provided at the forward end of harvester 400, as shown in FIGs. 1 and 5. Comb 404 includes a series of teeth for directing the crop on the field toward a threshing system 405. As an alternative to the comb, item 404 may represent a series of moving blades or knives 404 for shearing and/or stripping the crops extend outside of the housing 402. Knives 404 may reciprocate back and forth for shearing the crop on the field. A feeder (not shown) may be provided for delivering the crop material to threshing system 405.

Threshing system 405 comprises a housing 407, a transversely-mounted rotor 406 (otherwise referred to as a cylinder) mounted to housing 402 and 407 by a shaft 408, a stationary concave 409 positioned beneath rotor 406, and fans 411 positioned on opposing sides of rotor 406 that are also driven by shaft 408. Rasp bars (not shown), knives, blades, or other members project from the exterior surface of the rotor 406 for removing grain from the crop, as well as threshing the removed crop against the concave 409. Concave 409 is a foraminous member including apertures, perforations or openings through which the threshed grain and material other than grain (MOG) can pass.

Rotor 406 and fans 411 rotate along with shaft 408. A motor 410, which may be electric or hydraulically powered, for example, is configured to rotate shaft 408, rotor 406 and fans 411 about the axis of rotation of shaft 408. Motor 410 is mounted to one end of shaft 408, and a bearing 412 is mounted to the opposite end of shaft 408.

Housing 407 includes sidewalls for separating the fans 411 from the rotor 406. Housing 407 includes inlets and outlets 414 through which air is distributed by fans 411. As depicted by the arrows in FIGs. 4 and 5, the fans 411 deliver air through the rearwardly facing outlets 414 (FIG. 5).

A receptacle 420 is positioned beneath concave 409 for catching threshed grain falling through concave 409. An auger 422, which is driven by a motor 424 (or other mechanism), is positioned at the base of receptacle 420 for moving the threshed grain contained within receptacle 420 toward a grain elevator 430. Grain elevator 430 is positioned to one side of receptacle 420. Grain elevator 430 includes a series of pivoting paddles 434 that are configured to deliver grain from receptacle 420 to a clean grain tank 440 that is positioned above threshing system 405. Further details of a grain elevator are described in U.S. Patent App. Pub. No. 2018/0359927 to CNH Industrial America LLC, which is incorporated by reference in its entirety. Grain elevator 430, tank 440 and auger 422 are optional features and may be omitted, if so desired.

In operation, crop is delivered to threshing system 405 by comb 404 as vehicle moves in a forward direction. Specifically, crop is delivered in the annular space between the rotor 406 and the concave 409. Crop is threshed between rotor 406 and concave 409. The threshed grain, which is depicted as stippling, falls through the concave 409 and into receptacle 420. The lighter-weight material other than grain (MOG) 450 is blown rearwardly by the fans 411, as well as by the wind in the field, through the outlet 403 and onto the ground. The fan speed is controlled to avoid blowing the grain through the outlet 403 along with the light-weight MOG 450.

As noted above, the structure and operation of harvester 400 can vary and is not limited to the harvester that is shown and described herein.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A system (200) for moving a crop harvester (400), which is configured to be movably mounted to an agricultural vehicle (100), relative to an obstacle (120) in a crop field, ***characterized in that*** said system comprises:
a sensor (160) that is configured to sense a presence of the obstacle (120) in the crop field, and transmit a signal corresponding to the presence of the obstacle (120);
a motor (125) that is configured to move the crop harvester (400) relative to the agricultural vehicle (100); and
a controller (150) that is configured to activate the motor (125) based upon the signal received from the sensor (160) and thereby move the crop harvester (400) relative to the agricultural vehicle (100) to prevent physical contact between crop harvester (400) and the obstacle (120).

2. The system of claim 1, ***characterized in that*** the sensor (160) is configured to determine a distance between itself and the obstacle (120).

3. The system of claim 1, ***characterized in that*** the sensor (160) is configured to determine a size of the obstacle (120).

4. The system of claim 1, ***characterized in that**,* once the sensor (160) no longer senses the obstacle (120), the controller (150) is configured to activate the motor (125) based upon signals received from the sensor to return the crop harvester (400) to its original position.

5. The system of claim 1, ***characterized in that*** said system further comprises a transversely extending arm (122) connecting the crop harvester (400) to the agricultural vehicle, and optionally wherein the transversely extending arm is a telescoping member for moving the crop harvester (400) in a transverse direction.

6. The system of claim 1, ***characterized in that*** said system further comprises the crop harvester (400), and wherein the crop harvester (400) is removably mounted to the agricultural vehicle.

7. The system of claim 6, ***characterized in that*** the crop harvester (400) comprises a rotor (406), a foraminous concave (409) positioned beneath the rotor through which threshed grain can pass, and a receptacle (420) positioned beneath the concave (409) for collecting the threshed grain, and optionally wherein the crop harvester (400) comprises one or more fans (411) and a housing (407) for the one or more fans that are together configured to direct air rearwardly of the crop harvester (400), and, thereby direct material other than grain out of the crop harvester (400).

8. The system of claim 7, ***characterized in that*** the crop harvester (400) comprises a comb head (404) positioned forward of the rotor for directing the crop towards the rotor.

9. The system of claim 7, ***characterized in that*** the crop harvester (400) comprises a grain elevator (430) that is configured to transport the collected grain from the receptacle (420) to a separate grain tank (440) of the crop harvester (400).

10. An agricultural vehicle (100) further comprising the system (200) of claim 1.

11. The agricultural vehicle of claim 10, ***characterized in that*** the agricultural vehicle is a grain cart tractor.

12. The agricultural vehicle of claim 10, ***characterized in that*** the agricultural vehicle is configured to move along a path (130) guided by a global positioning system (GPS), and the system is configured to move the crop harvester (400) transversely with respect to said path as the agricultural vehicle moves along said path.

13. A method of moving a crop harvester (400), which is movably mounted to an agricultural vehicle, relative to an obstacle (120) in a crop field, ***characterized in that*** said method comprises:
sensing a presence of the obstacle (120) in the crop field, using a sensor (160), and transmitting a signal corresponding to the presence of the obstacle (120) to a controller (150); and
activating a motor (125) based upon the signal received by the controller to move the crop harvester (400) relative to the agricultural vehicle in order to prevent physical contact between crop harvester (400) and the obstacle (120).

14. The method of claim 13, ***characterized in that*** said method further comprises:
calculating a distance separating the obstacle (120) from the crop harvester (400); and
either identifying or calculating a ground speed of the crop harvester (400).

15. The method of claim 14, ***characterized in that*** said method further comprises calculating a time to reach the obstacle (120) based upon the ground speed and the calculated distance, and optionally comparing the calculated time with a pre-determined time, and, performing the activating once the calculated time either equals the predetermined time or is within a pre-determined threshold of the pre-determined time.
